# EUROPEAN PATENT APPLICATION

(11) **EP 1 145 643 A1**
(43) Date of publication of application: **17.10.2001**
(21) Application number: 00303024.4
(22) Date of filing: 10.04.2000
(51) Int. Cl.: A23J 1/20, A23J 3/08, A23L 1/305

(54) **Improved milk protein concentrate**

(71) Applicant: Connolly, Phillip, Lake Arrowhead, California 92352 (US)
(72) Inventor: Connolly, Phillip, Lake Arrowhead, California 92352 (US)
(74) Representative: Stark, Amanda Jane

(57) **Abstract**

An improved protein product incorporating probiotic bacteria to enhance metabolic processing in the body, and such probiotic organisms include bifido bacteria, acidophilus bacteria, and other lactic acid producing bacteria.

## Description

The present invention relates to an improved milk protein concentrate and methods for the production and use thereof.

For approximately the past decade, milk protein concentrate (MPC) has been sold in the U.S. market. This concentrate is manufactured in foreign countries, and generally as previously produced the concentrate is of good quality, approximately 80% protein, and is formed as a powder. Generally, the manufacturing technology to produce such a concentrate is quite expensive, in addition to the cost of the milk involved, and it has been difficult to produce such a milk protein concentrate, as a result of this expense factor. Also, in the past, the concentrate was used as a base protein in the production and marketing of a protein meal replacer, and which was used in the world sports market, to enhance protein generation within the body.

### SUMMARY OF THE INVENTION

The current invention, unlike the previously produced concentrate, uses a milk protein, or any of the other related proteins, which are fortified or cultured with a probiotic bacteria or combination of several probiotic bacteria and for application and usage in the sports nutrition area, to enhance strength, protein development, and enhanced physical and strength qualities of the consumer.

The current invention relates to the production of forming a milk protein concentrate, and an improved method for manufacturing the same, for application in the sports field. The concept of the invention is to take a high quality milk protein concentrate and add a new property to it, to make it even more efficient in the body.

The current invention is a milk protein concentrate, i.e., the milk protein of skim milk that has been concentrated to a higher percentage of protein than would be found in skim milk by removal of undesired milk constituents, such as lactose, ash, and fat. The protein concentrate can run from 65% to 90%, depending on the process used to make the milk protein. Milk protein concentrates have become popular, as previously described, when their ingredients are enhanced with respect to their protein constituency, and have found application in sports nutrition and special nutrition food products, such as high protein meal replacers, protein supplement powders, and grocery store products to compete against the earlier concentrates. It is believed that milk protein concentrates will gain in popularity for these types of products, because recent scientific studies are showing that such concentrates, when combined with certain other protein products, can help to moderate certain metabolic functions in the body.

The sports nutrition field currently is the most demanding of applications for such proteins. Serious athletes and body builders spend large amounts of money on chemicals and proteins in an effort to lower their overall body fat content while increasing their lean tissue (muscle) mass. Serious body builders spend significant amounts of money per day, and per month, just on protein purchases. When they spend that kind of money on protein products, they really do care about how well their body is utilizing the protein to make muscle tissue. The alternative to utilizing this type of a protein product to enhance muscle tissue is the use of illegal or dangerous drugs to increase the efficient metabolism of the protein, and its generation of muscle tissue.

Proteins are such large molecules that the body can only digest and utilize a portion of the protein that is consumed for manufacture of muscle and the remainder of the protein is utilized for energy or is simply expelled from the body. It is commonly known that a protein that would be used in a highly efficient manner for the body, i.e., the highest percentage of protein consumed that would be used to make muscle tissue, would be in high demand by serious athletes and body builders. There is large disagreement in the sports nutrition industry about which proteins will provide the greatest gain in muscle tissue per gram consumed. Some marketers have decided, instead, to focus on improving the digestive system in the customers to help with milk protein utilization. Marketers and consumers alike are well aware that improved digestion will help with better absorption of protein into the body. To date, people have tried "predigesting" proteins to make them more easily digested by the body and, thus, more efficiently absorbed into the cells. Other companies have tried adding digestive aids, such as enzyme mixes, into their protein powders, and have tried to convince their customers that these aids will help with providing maximum protein absorption into the body. Still others add the amino acid glutamine to their preparations, because glutamine is known to assist in maintaining healthy intestinal linings thereby helping with protein absorption. Everyone, however, continues to search for some new method to insure that their customers gain the maximum amount of muscle from the protein their consume.

Lately, some companies have concentrated on a new approach to building the maximum lean tissue in humans. There are two arts to human metabolism, anabolic metabolism (anabolism), or the building of a body, and catabolic metabolism (catabolism), or the tearing down of the body. On a daily basis, the average body is going through constant cycles of building up and tearing down. During the immediate post-workout or post-exercise period, the body is in a catabolic mode. However, exercise usually activates certain anabolic switches in the body and the body then begins to build over what the exercise destroys. The body even builds a little more than what is destroyed and that is why exercise is anabolic. Events like stress or illness are catabolic. The body's immune system is powdered by glycogen, which is stored in muscle tissue. When the body is under stress or illness, it starts tearing down muscle tissue to get at the glycogen. Long bouts with stress or illness can nullify years of hard exercise and clean living. In theory, if one can skew the body's metabolism significantly towards the anabolic side, then the body will be building much faster than it is tearing down and one can grow bigger muscles. Consequently, some companies have recently concentrated on developing protein powders that will also promote good health, i.e. good health is skewed towards anabolism.

Thus, the current invention is to find a method for making a new, improved performance milk protein concentrate that is not only effective, but properly fits into the body metabolism function, in order to maximise and obtain the most efficient production of protein, that can generate healthy muscle tissue. The concept of this current invention is to utilize the high quality milk protein concentrate, and add a new property to it so the product can make it even more efficient when metabolized by the body. Hence, this product utilizes the high quality milk protein concentrate, and has added to it a probiotic organism, generally in the form of a bifido bacterium, acidophilus, and yogurt culture bacteria. These bacteria are considered to be the most important intestinal bacteria for humans, and are thus classified as probiotic, which are good for living organisms in the human being. One gram of milk protein concentrate, having these ingredients added to it, can contain over a million viable probiotic organisms. One reason for the advantage from utilizing this type of a compound is that it is known, through studies, that having a correct balance of probiotic organisms in one's intestines will actually improve the health and strength of the consumer.

Hence, one advantage of this invention is to provide a new process with enhanced ingredients for manufacture of such a protein supplement.

Another advantage of this current invention is to use a milk protein concentrate or isolate powder that has been cultured with various enzymatic organisms for use in application in the sports nutrition field. The cultured product of this invention is unique to the sports nutrition field.

A further object of this invention is to provide a protein supplement that is more efficient in its digestion of the food eaten.

Another object of this invention is to provide a protein supplement that is more efficiently absorbed, and provides enhanced utilization as a food nutrient.

A further object of this invention is to provide a protein supplement that generates better overall health.

Yet another object of this invention is to provide for the serious athlete and body builder a higher ratio of anabolism compared to catabolism.

Still another object of this invention is to provide more muscle tissue growth for the serious athlete.

Yet another object of this invention is to provide for the athlete and body builder less harmful side effects from consuming high quantities of protein.

Still another object of this invention is to provide a protein supplement, that is cultured, to achieve a gaining of amino acids from the probiotic type of bacteria that is not consumed as a meat or dietary supplement.

Still another object of this invention is to provide for more efficient utilization of protein per gram when consumed.

### DESCRIPTION OF THE PREFERRED EMBODIMENT

The milk protein used in the production of this current invention is known to possess a high quality amino acid profile. In addition, the bioactivity of the protein fractions themselves have been shown to trigger anabolic activity when consumed. Some of the protein fractions and peptide sequences have been shown in studies to actually help boost the human body immune system. The concentrate, by itself, will help to promote a net activity in the human body that is skewed towards anabolism. However, it is desired to improve the concentrate so that it would further promote good health in those subjects that consume protein and provide them with that much additional net anabolism. The protein supplement of this invention is probiotic, meaning supporting (or improving) life. A probiotic type of product is a product which contains a component, or components, that have been shown to actually improve a bodily function when that component is introduced into the body. The current invention is manufactured by making a protein milk concentrate as per the normal procedure, and then introducing enzymatic organisms into the concentrate in such quantities that the counts of these organisms total from 100,00 to as much as 50,000,000 viable organisms per gram of concentrate powder.

It is generally recognize that probiotic types of organisms, that can enhance protein in metabolism, are those bacteria that are naturally found and/or thrive in the intestines of the human body, and that also provide beneficial health effects in the human. The human intestinal system is loaded with organisms that can either assist with digestion and help to promote good health, or that can be harmful to the human host. Examples of helpful organisms are bifido bacteria, acidophilus bacteria, and lactic acid producing bacteria. Examples of harmful organisms would include yeast, molds, coliforms, and gram negative bacteria. These harmful organisms actually produce toxins as metabolic by-products as they grow and multiply in the intestines. Bifido bacterium, also sometimes called bifidus, is the most commonly known probiotic organism. The two bacteria commonly known as yogurt cultures are also known as probiotic type of bacteria. Acidophilus has also been shown to provide certain benefits to human beings and is considered to be enhancing or protein metabolism. Bifidus is a native bacterium in the human intestinal system. In fact, it is commonly accepted that one cannot have too much bifidus in the intestine. High intestinal bifidus counts have been associated with good health. Bifidus, however, can be easily destroyed by the foods we eat or by other bacteria, yeast and molds. When the bacterial counts in our intestines become skewed towards large numbers of yeast, molds, coliforms, etc., we begin to build up toxins in our intestines. These toxins are actually the metabolic by-products of the undesirable organisms that have taken over our intestines. Some of these toxins can directly and immediately affect our health while other toxins have a more insidious effect on our health by damaging our intestinal lining, making it more difficult to absorb the badly needed nutrients from the food we consume. The effect, either way, is that human health suffers when we accumulate high numbers of bad organisms in our intestines, and the body goes into a net catabolism.

There are ways to avoid building up the numbers of bad organisms in our intestines. We need to consume organisms which are good for our intestines on a daily basis to replenish those organisms that have been destroyed and/or we can consume foods which contain components that bitotic organisms feed on and increase their survivability by feeding them better. Bifido bacteria feeds on oligosaccharides. Oligosaccharides are considered favorable to biotic production because they help to maintain large numbers of bifido bacteria in the intestines. However, oligosaccharides are carbohydrates, and carbohydrates are not always desired in the sports nutrition and general good health fields because they are known to generate gas in the intestines. So, of one doesn't wish to consume daily quantities of oligosaccharides then one needs to actually consume live, viable protein digesting enhancing organisms on a daily basis in an effort to maintain healthy counts of organisms in the intestine.

Yogurt has long been considered a healthy food stuff due to the live, viable organisms in yogurt. Yogurt organisms thrive in the human intestine. Yogurt organisms multiply much faster than yeast and molds and can actually choke out the yeast and molds as they multiply by creating metabolic by-products of their own that eventually destroy yeast and molds. Some studies have shown that consuming yogurt on a daily basis leads to lower intestinal yeast and mold counts. Coliforms, which are considered to be harmful to humans, such as *E. coli*, and others, are also depleted out of the system by the yogurt and other lactic acid producing organisms.

Acidophilus also thrives in the human intestines. Acidophilus multiplies extremely fast, and will, again, choke out the other, harmful organisms that are introduced into our intestines on a daily basis. Acidophilus has not been found to do any harm to the humans, and by virtue of destroying the harmful bacteria, actually helps to maintain good health in humans.

There are other bacteria that are also known to be beneficial to humans. These include lactobacilius plantarum, etc. The current invention contemplates utilizing the milk protein concentrate which has been fortified with these beneficial organisms to improve the overall digestive health of the consumer while providing the basic building blocks for muscle tissue, such as amino acids. The net effect from consuming such a cultured protein should be improved health, a higher daily degree of anabolism with respect to catabolism, and a larger net gain in lean body tissue. The serious athlete or body builder should see better results in gaining muscles and will feel better in the long run.

The current invention contains bifidus longum in combination with lactobacilius bulgaricus and streptococcus thermophilus, which are the most common form of yogurt organisms, and lactobacillus acidophilus. However, one may utilize any combination of probiotic organisms added to the milk protein. The milk protein concentrate can be made with any one individual of the above organisms, or any combination of one or more of such organisms, or even utilize other probiotic organisms like lactobacillus plantarium. The current invention, though, selects the four above organisms for the initial product because of their benefits to human beings and these organisms are compatible with each other and can thrive simultaneously in the intestine. The yogurt organisms and acidophilus multiply fast in the intestines. As they multiply, they produce lactic acid as a metabolic by-product. Some studies have indicated that lactic acid producing bacteria can help to prevent colon cancer, and it is thought that perhaps they do so by cleaning up the toxins from the colon. In addition, these lactic acid producing bacteria also produce enzymes as metabolic by-products which can be used by the human host for digestion, absorption of proteins, fats, and complex carbohydrates. Bifidus bacteria are the main digestive force in the intestines. They aid more efficient digestion/absorption by actually consuming toxins and producing beneficial metabolic by-products.

One of the reasons for utilizing a probiotic organism in the sports nutrition area, as can be understood, is due to the fact that serious athletes and body builders try to consume 1.5 grams to 2.0 grams of protein per kilogram of body weight daily. Some even consume higher quantities, hoping to attain greater efficiency in the metabolic processing of protein, into muscle tissue, once they find out that consuming high quantities of protein can actually help build larger muscles. This means that a 250 pound (114 kg) athlete will try to consume about 200 grams of protein per day. This is almost a half of pound of protein. Consuming large amounts of protein daily has the potential to be deleterious to one's health. As the body uses protein for manufacturing muscle tissue or for energy, substantial amounts of urea are also generated. The more protein one consumes, the more urea the body produces. The urea resulting from protein metabolism can have harmful effects on the kidneys, and is also known to collect in the intestines. As the urea sits in the intestines, it can do harm to the intestinal lining and interfere with the efficient absorption of food nutrients into the body. Probiotic colonic organisms will actually utilize the harmful urea collected in the colon from bodily protein metabolism to synthesize new amino acids. This synthesis provides two benefits in sports nutrition. First, the harmful colonic urea content, from consumption of abnormally large quantities of protein, is reduced. Secondly, the probiotic bacteria manufacture amino acids from the urea. These amino acids include the essential amino acids needed by every human being and the specific amino acids desired by athletes and body builders. Studies have shown that the amino acids synthesized by the probiotic bacteria are then absorbed into the host body to be utilized to the benefit of the consumer.

An example of the ingredient listing for production of probiotic milk protein concentrate of this invention includes the following ingredients:

### EXAMPLE:

Milk protein concentrate: 65% to 90%

One or more of the following enzymatic organisms:
A. Bifido Bacteria - .01% to 1%
B. Acidophilus Bacteria - .01% to 1%
C. Lactic Acid Producing Bacteria - .01% to 1%
   a. Lactobacillus Bulgarious
   b. Streptococcus Thermophilus
   c. Lactobacillus Acidophilus

One or more of the foregoing enzymatic bacterium are used and intermixed with the milk protein concentrate powder. This is simply achieved by the routine mixing process, since the enzymatic organisms, also identified above, can be obtained in the powdered form. The ingredients are simply mixed until their diffusion is thorough within the powdered concentrate, and then can be packaged ready for shipment, marketing, and consumption.

The process as used in this particular invention commences with the actual culturing of the organisms used in this procedure for producing milk protein concentrate. Cheese is usually the starter culture, within tanks, or a yogurt starter culture tank is employed, and the organisms are grown. A base medium, such as food and nutrients, of permeate from an ultrafilitration process is combined with the hydrolyzed milk peptones, to feed the organisms while they grow. Then a fluid skim milk is processed through a filtering membrane to separate out the lactose, ash, and other undesirable milk constituents while concentrating the skim milk protein to higher levels by standard industry processing practices. When the desired protein content of 65% to 90% protein is reached, the ultrafiltration is then ceased, and then, in the fluid state, the milk protein concentrate is inoculated with the organism cultures to a desired total organism count level of 100,000 to 50,000,000 per gram of the MPC solids. The cultures can get as high as 100,000,000 organisms per gram, so one only needs to add 10% or less, of the concentrated organism cultures to get the desired counts. Then one spray dries the fluid inoculated concentrate under a gentle, low heat condition, to protect the organisms, and turn it into a powder.

Another and more facile way to process the milk protein concentrate, is to start with an existing milk protein concentrate powder, having a protein content of 65% to 95%. The powder is then placed into a mixer, such as a ribbon blender, V blender, etc., and a powdered preparation of the various organisms is then applied and added thereto. The freeze-dried powdered preparations of the various organisms are available from sources. These powdered preparations contain organism counts as high as 100,000,000 per gram. One then adds the proper amount of each powdered preparation to the milk protein concentrate powder in the blender and the two are mixed together until homogenous. If one wants to make a milk protein concentrate powder, with a count of 10,000,000 per gram, one needs to add 10 grams of the freeze-dried organism powder to 90 grams of the milk protein concentrate. To obtain a final product with a count of 1,000,000 per gram, one only needs to add 1 gram of the organism concentrate powder to 99 grams of the milk protein concentrate.

Other probiotic organisms, that may be used in the processing of this invention, include the following organisms:
Lactobacillus plantarum
Lactobacillus helveticus
Lactobacillus paracasel
Bifidobacterium bifidum
Bifidobacterium infantis
Bifidobacterium animalis
Heliobacter pylori (not necessarily probiotic)

These are examples of the type of probiotic organisms available for usage in the processing of this milk protein concentrate.

Other lactic acid producing bacteria, or any of the bifidobacterium, may be used for this purpose.

Variation and modifications to the subject matter of this invention, and its method of processing, may become readily apparent to those skilled in the art upon reviewing the disclosure as provided herein. An explanation of this invention, as set forth in the disclosure, and any variations or modifications thereto, are intended to be encompassed by the scope of the invention as provided. The description of the preferred embodiment, and the example as set forth, is furnished for illustrative purposes only.

## Claims

1. A process for producing an improved probiotic protein concentrate comprising the steps of:
culturing milk into cheese within tanks;
generating food for the milk culture by combining a base medium such as food and nutrients of a permeate from an ultra-filtration process with hydrolyzed milk peptones;
combining this food with the culturing milk to feed the milk culture;
filtering the skim milk fluid by passing the skim milk through a filtering membrane to separate out the lactose, ash, and other undesirable milk constituents while concentrating the skim milk protein;
discontinuing the filtering of the skim milk when the skim milk protein content is about 65% to 90% thereby generating a skim milk protein concentrate;
inoculating the skim milk protein concentrate with probiotic organism cultures until a total organism count reaches about 100,000 to 50,000,000 organisms per gram of skim milk protein concentrate;
converting the inoculated skim milk protein concentrate from a fluid to a powder by spray drying the fluid inoculated milk protein concentrate under a gentle, low heat condition.

2. The process according to claim 1 wherein the probiotic organism is an organism such as lactobacillus plantarum, lactobacillus helveticus, lactobacillus paracasel, bifidobacterium bifidum, bifidobacterium infantis, bifidobacterium anamalis, any other form of bifidobacterium, heliobacter pylori, or any other lactic acid producing bacteria.

3. A process for producing an improved probiotic protein concentrate comprising the steps of:
combining a powder form of skim milk protein content having a skim milk protein content of about 65% to 90% with freeze-dried powder forms of a probiotic mixing the powdered skim milk protein concentrate with the powdered probiotic organism cultures until the combined powder is homogenous.

4. The process according to claim 3 wherein the probiotic organism is an organism such as lactobacillus plantarum, lactobacillus helveticus, lactobacillus paracasel, bifidobacterium bifidum, bifidobacterium infantis, bifidobacterium anamalis, any other form of bifidobacterium, heliobacter pylori, or any other lactic acid producing bacteria.

5. A probiotic milk protein concentrate including the following ingredients by percentage of weight, including:
Milk protein concentrate: 65% to 90% by weight
At least one of the following enzymatic organisms by weight:
A. Bifido Bacteria - at least 0.01% to 1%
B. Acidophilus Bacteria - at least 0.01% to 1%
C. Lactic Acid Producing Bacteria - at least 0.01% to 1%
a. Lactobacillus Bulgarious
b. Streptococcus Thermophilus
c. Lactobacillus Acidophilus
mixing said ingredients until their diffusion is thoroughly achieved within the powdered concentrate.

6. The probiotic milk protein concentrate of claim 5, and wherein one or more of the following probiotic organisms may be added to the concentrate by weight of 0.1% to 1%:
A. Lactobacillus plantarum
B. Lactobacillus helveticus
C. Lactobacillus paracasel
D. Bifidobacterium bifidum
E. Bifidobacterium infantis
F. Bifidobacterium animalis
G. Heliobacter pylori (not necessarily probiotic).

7. A high protein meal comprising the probiotic milk protein concentrate of claim 5.

8. A dietary supplement comprising the probiotic milk protein concentrate of claim 5.

9. Use of the probiotic milk protein concentrate of claim 5 in the manufacture of a high protein meal for administering to an individual on a high protein diet.
